# EUROPEAN PATENT SPECIFICATION

(11) **EP 1 513 354 B1**
(45) Date of publication and mention of the grant of the patent: **10.05.2006**
(21) Application number: 03019879.0
(22) Date of filing: 02.09.2003
(51) Int. Cl.: H04Q 7/22

(54) **Additional voice information relating to displayed items**
Sprachliche Zusatzinformation bezüglich angezeigter Menüpunkte
Informations vocales supplémentaires concernant des articles affichés

(43) Date of publication of application: 09.03.2005
(73) Proprietor: Sony Ericsson Mobile Communications AB, 221 88 Lund (SE)
(72) Inventor: Veige, Bodil, 224 71 Lund (SE)
(74) Representative: Dahnér, Christer

(56) References cited:
- EP-A- 0 926 911
- EP-A- 1 253 767
- WO-A-99/21382
- WO-A-02/069640
- DE-A- 10 006 351

## Description

### TECHNICAL FIELD OF THE INVENTION

The present invention generally relates to the field of providing help information in relation to items presented in portable communication devices. More particularly the invention relates to a method of enabling provision of additional information in relation to items presented to a user of a portable communication device, a portable communication device for enabling provision of additional information in relation to items presented to a user of the portable communication device, a method of providing, from a help service, additional information in relation to items presented to a user of a portable communication device, a help service device for providing additional information in relation to items presented to a user of a portable communication device as well as to a system for enabling provision of additional information in relation to items presented to users of portable communication devices.

### DESCRIPTION OF RELATED ART

The cellular phones of today have more and more different functions and applications in them as well as menu systems used for navigating through such applications, functions and other data.

A user would in many cases need more information about a function or any other item of information presented to him, since many functions and applications might be hard to understand. Today he can normally find such information by reading of a manual. This is often time consuming and the user might not have one at hand when he needs to find such information, because he might be at one location with his phone, while the manual might be at another location. Such information might also be present on the Internet, but then the user would have to have a computer in order to reach the information needed.

It is also possible to provide such help information in the phone itself, which would be provided to the user upon pressing of suitable keys. Such information would then occupy valuable memory space, which is then blocked from use for better purposes, like for instance to provide more functions and applications in the phone.

WO 02/069640 describes an interactive television system, which includes a remote control, a television set and a set top box. Here a request for customer support is received, a support centre associated with displayed content is identified and a communication channel is established between the support centre and the customer.

WO 99/21382 describes a method and a system for providing automated information to a subscriber of a cellular phone system, where a subscriber requests help by pressing a predetermined key. The subscriber is then connected to an Intelligent Peripheral (IP) platform, which performs a database query based on the electronic serial number (ESN) and mobile identification number (MIN) associated with the subscriber and generates automated responses customised to the device used by the subscriber.

DE 10006351 describes a device for retrieving information regarding the function and the operation of different equipment of a motor vehicle. The device includes a vehicle bus to which components of vehicle electronics are connected and an information base in which the function and the operation of different equipment of the motor vehicle are stored. There is also a microprocessor connected to the vehicle bus and being programmed to detect information requirements of the user by evaluating data transmitted to the vehicle bus by individual components of the vehicle electronics and to automatically retrieve corresponding information from the information base.

There is thus a need for being able to provide additional information in relation to items presented to a user of a cellular phone that is direct, simple and does not occupy any valuable memory space in the phone.

### SUMMARY OF THE INVENTION

The present invention is thus directed towards solving the problem of providing additional information relating to items presented in a portable communication device that is direct, simple and does not occupy any memory space in the device.

This is achieved by setting up a voice connection from the device to an external help service for an item and then providing the additional information related to the item orally from the help service.

One object of the present invention is thus to provide a method enabling the provision of additional information relating to items presented on a portable communication device that is direct, simple and does not occupy any memory space for the additional information in the portable communication device.

According to a first aspect of the present invention, the object is achieved by a method of enabling provision of additional information in relation to items presented to a user of a portable communication device comprising the steps of:
presenting a number of items to a user,
providing a help function related to the items, and
automatically establishing a voice connection to an external help service in dependence of a selection of the help function for a specific item, such that a user can receive additional oral information regarding the item from the external help service.

A second aspect of the present invention is directed to a method including the features of the first aspect, further comprising the step of receiving said oral information via the connection.

A third aspect of the present invention is directed towards a method including the features of the first aspect, wherein the items are presented in the navigation system of and/or for at least one application provided in the portable communication device.

A fourth aspect of the present invention is directed towards a method including the features of the first aspect, wherein each item is provided with a code and further comprising the step of automatically transmitting the code to the external help service in dependence of the selection of the help function in order to allow easier provision of help information regarding the selected item.

A fifth aspect of the present invention is directed towards a method including the features of the fourth aspect, wherein the portable communication device has a language setting used when presenting items and the step of transmitting includes transmitting information concerning the language setting to the external help service in order to enable provision of oral information by the help service in the language of the device.

Another object of the present invention is to provide a device, which enables the provision of additional information relating to items presented on a portable communication device that is direct, simple and does not occupy any memory space for the additional information in the portable communication device.

According to a sixth aspect of the present invention, this object is achieved by a portable communication device for enabling provision of additional information in relation to items presented to a user of a portable communication device comprising:
an information presentation unit for presenting items,
at least one user input unit,
a radio communication unit for establishing voice connections with an external help service, and
a help function control unit arranged to:
   provide a help function in relation to the items on the information presentation unit, and
   control the radio communication unit, in dependence of the selection of the help function for a specific item, to automatically establish a voice connection to the external help service, such that a user can receive additional oral information regarding the item from the external help service.

A seventh aspect of the present invention is directed towards a device including the features of the sixth aspect, wherein the items are presented in the navigation system of and/or for an application provided by the portable communication device.

An eighth aspect of the present invention is directed towards a device including the features of the sixth aspect, further comprising an item code storage comprising a code associated with each item for which help information is present and the help function control unit is further arranged to make the radio communication unit automatically transmit the code to the external help service in dependence of the selection of the help function in order to allow easier provision of help information regarding the selected item.

A ninth aspect of the present invention is directed towards a device including the features of the eighth aspect, wherein the portable communication device has a language setting storage comprising a language setting used when presenting items and the help function control unit is further arranged to make the radio communication unit automatically transmit information concerning the language setting used in the device to the external help service in order to enable provision of oral information by the help service in the language of the device.

A tenth aspect of the present invention is directed towards a device including the features of the sixth aspect, wherein the device is a cellular phone.

Another object of the present invention is to provide a method that provides additional information relating to items presented on a portable communication device that is direct, simple and does not occupy any memory space for the additional information in the portable communication device.

According to an eleventh aspect of the present invention, this object is achieved by a method of providing, from a help service, additional information in relation to items presented to a user of a portable communication device comprising the steps of:
receiving a phone call from the portable communication device, which has been made automatically in dependence of a selection of a help function for a specific item, and
providing oral information regarding the item to the user of the portable communication device via the connection.

A twelfth aspect of the present invention is directed towards a method including the features of the eleventh aspect, further comprising the step of receiving a code identifying the item from the portable communication device and fetching oral information regarding the item based on said code.

A thirteenth aspect of the present invention is directed towards a method including the features of the twelfth aspect, further comprising receiving language setting information from the portable communication device and the step of fetching oral information is also based on said language setting information.

A fourteenth aspect of the present invention is directed towards a method including the features of the eleventh aspect, further comprising the step of providing, from the help service, the user of the portable communication device to choose from at least two pieces of oral information in relation to the selected item and providing a piece of oral information in dependence of selection of that piece.

Another object of the present invention is to provide a device that provides additional information relating to items presented on a portable communication device that is direct, simple and does not occupy any memory space for the additional information in the portable communication device.

According to a fifteenth aspect of the present invention, this object is achieved by a help service device for providing additional information in relation to items presented to a user of a portable communication device comprising:
a communication unit arranged to receive a phone call from the portable communication device, which has been made automatically in dependence of a selection of a help function for a specific item,
a voice message store, and
a voice message control unit arranged to retrieve oral information from the voice message store regarding the item and control the communication unit to provide said oral information to the user of the portable communication device via the connection.

A sixteenth aspect of the present invention is directed towards a device including the features of the fifteenth aspect, wherein the communication unit is arranged to receive a code identifying the item from the portable communication device and forward said code to the voice message control unit and the voice message control unit is further arranged to fetch oral information regarding the item based on said code.

A seventeenth aspect of the present invention is directed towards a device including the features of the sixteenth aspect, wherein the communication unit is arranged to receive language setting information from the portable communication device and forward said language setting information to the voice message control unit and the voice message control unit is further arranged to fetch oral information also based on said language setting information.

An eighteenth aspect of the present invention is directed towards a device including the features of the fifteenth aspect, wherein the voice message control unit is further arranged to allow the user of the portable communication device to choose from at least two pieces of oral information in relation to the selected item and to provide a piece of oral information in dependence of selection of that piece.

Another object of the present invention is to provide a system that provides additional information relating to items presented on a portable communication device that is direct, simple and does not occupy any memory space for the additional information in the portable communication device.

According to a nineteenth aspect of the present invention, this object is achieved by a system for enabling provision of additional information in relation to items presented to users of portable communication devices comprising:
at least one portable communication device comprising:
   an information presentation unit for presenting items,
   at least one user input unit,
   a radio communication unit for establishing voice connections with an external help service, and
   a help function control unit arranged to:
      provide a help function in relation to the items on the information presentation unit, and
      control the radio communication unit, in dependence of the selection of the help function for a specific item, to automatically establish a voice connection to the external help service,
a help service device comprising:
   a communication unit arranged to receive a phone call from the portable communication device, which has been made automatically in dependence of a selection of a help function for a specific item,
   a voice message store, and
   a voice message control unit arranged to retrieve oral information from the voice message store regarding the item and control the communication unit to provide said oral information to the user of the portable communication device via the connection.

The invention has the following advantages. Considerable memory space is saved in portable communication device. Because of the speed with which speech connections are set up, the additional information is also obtained quickly and can be obtained virtually everywhere where the portable communication device is located. The information is furthermore easy to obtain, since the user just has to actuate a user input unit. The invention furthermore enables providing the oral information and presenting the item simultaneously, such that the user can easily recognise for which item the additional information is related when he receives it.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a block schematic of a portable communication device connected to a help service device via a network,
fig. 2 shows a front view of a portable electronic device in the form of a cellular phone 1,
fig. 3 shows a block schematic of the relevant parts of the invention inside the phone in fig. 2,
fig. 4 shows a front view of some keys and the display of the phone in fig. 2, where the display shows a help function in relation to a navigation menu in the phone of fig. 2,
fig. 5 shows a flow chart of a method of enabling provision of additional information in relation to the items in the navigation menu in fig. 4, and
fig. 6 shows a flow chart of a method of providing additional information in relation to the navigation menu performed in the help service device of fig. 1.

### DETAILED DESCRIPTION OF EMBODIMENTS

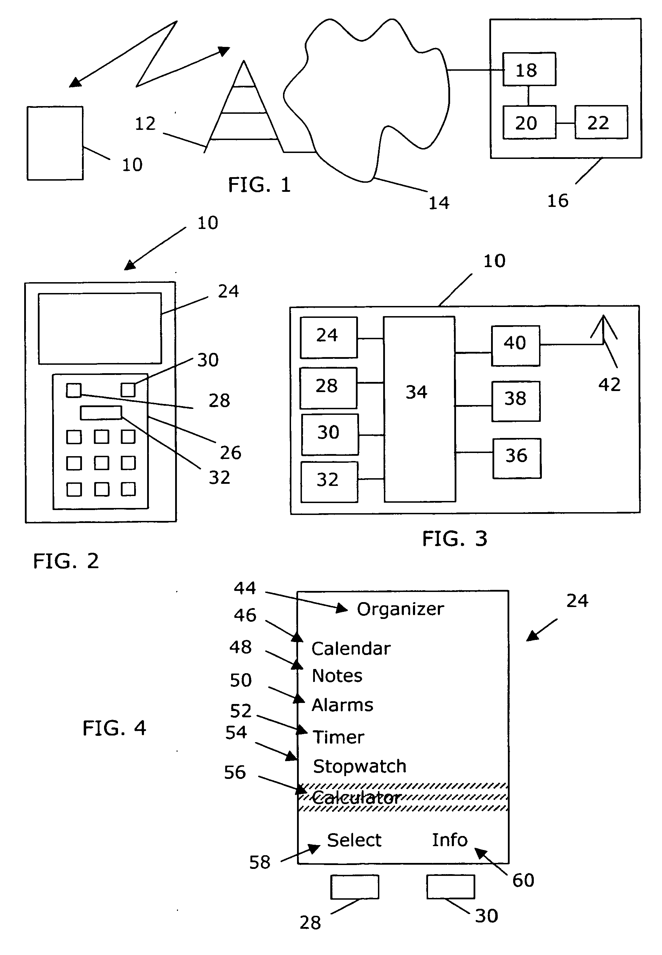

Fig. 1 shows a block schematic of a system according to the invention including a portable communication device 10 connected to a help service device 16 over a cellular network 14 via a base station 12. The help service device 16 comprises a communication unit 18 arranged to communicate over the network 14 using the communication protocol of that network, a voice message control unit 20 connected to the communication unit 18 and a voice message storage 22 connected to the voice message control unit 22. For simplicity the system will in the following be described in relation to only one portable communication device 10. However, it should be realised that it is applicable to several such devices. The help service device 16 is in the preferred embodiment part of the network and run by the operator of the network. It should however be realised that this device can be provided by another operator or service provider or for instance by the manufacturer of the portable communication device 10. The functioning of the system according to the invention will be described later on.

A portable communication device according to the invention is shown in a front view in fig. 2. In the preferred embodiment the device is a cellular phone 10 having an antenna which is in-built and hence not shown, an information presentation unit in the form of a display 24 and a keypad 26 including a number of user input units or keys. Apart from making and receiving telephone calls, the keypad 26 is used for entering information such as selection of functions and applications and responding to prompts and the display 24 is used for displaying functions and prompts to a user of the phone. In order to do this, the keypad 26 includes a navigation key 32, which can be used for navigating up and down through a menu system provided in the phone. The phone 10 also includes a first and a second selection key 28 and 30, which provide different functionalities depending on where in the menu system a user of the phone has navigated. In the menu system sets of items are often provided in the form of lists.

Fig. 3 shows a block schematic of the different parts of the phone 10 relevant to the present invention. The display 24 is here shown as a box connected to a help function control unit 34, which is here provided as the menu control unit controlling the display and selection of items in the phone. The first and second selection keys 28 and 30 are also connected to the help function control unit 34 as is the navigation key 32. All these keys and the help function control unit 34 are shown as boxes. The help function control unit 34 is furthermore connected to a radio communication unit 40, to an item code storage 36 and to a language setting storage 38. The radio communication unit 40 is connected to an antenna 42 for communication with the earlier described network via the base station. In this communication the radio communication unit 40 uses the communication protocol associated with the network.

In fig. 4 a front view of the display 24 is shown, where the display 24 shows a number of items in a list of items. The items shown here are items provided in a menu system and here in the so-called "Organizer" list 44, present in for instance many Sony Ericsson phones. It should be realised that this list is just an example of a list where the invention can be used. The list includes a number of items, of which only six are shown here. It should however be realised that the list can be scrolled and thus more items can be shown. This scrolling is normally done by actuating the navigation key shown in fig. 2 and 3. Here a first item, "Calendar", 46 is shown just below the list header 44. Below this item are shown a second item "Notes" 48, a third item 50 "Alarms", a fourth item 52, "Timer" a fifth item 54, "Stopwatch" and a sixth item 56 "Calculator". Here one of the items is marked, the sixth item 56, which is indicated by small hatched lines. This marking has been obtained by pressing the navigation key in the upwards or downwards direction. Below the screen are shown the first and second selection keys 28 and 30. The selection keys are content dependent, i.e. they provide different functionalities depending on where in the menu system the user has navigated using the navigation and selection keys. Because of this the current functions of these keys are shown at the bottom of the display 24 just below the sixth item 56 and just above the selection keys 28 and 30. Above the first selection key 28 is shown the text "Select" 58, which indicates that pressing this key either starts an application or function associated with the marked item or that submenus associated with the marked item will be presented to the user, all depending on the where in the menu system the user has navigated. Above the second selection key 30 is shown the text "Info" 60, which means that if a user presses this key, he will get more information about the marked item. The functioning of this second selection key 30 will be described in more detail shortly.

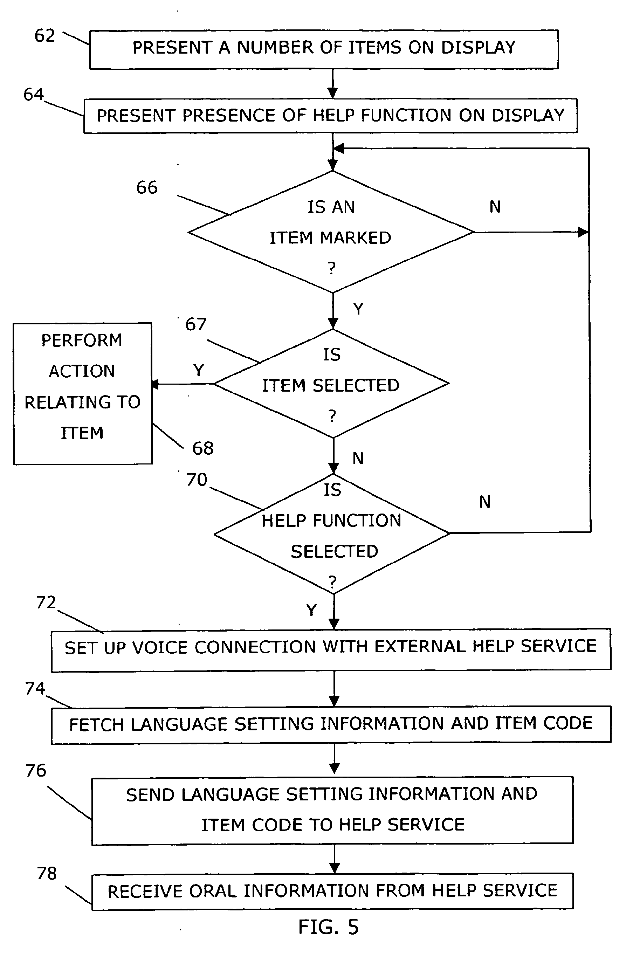

A method of enabling the provision of additional information in relation to an item presented to a user of the phone will now be described in relation to fig. 2, 3, 4 and 5, where the latter shows a flow chart of the method, which is performed by the phone.

As mentioned earlier a number of items 46, 48, 50, 52, 54, 56 are shown or presented on the display 24 in a list of items in the menu system of the phone 10, step 62. At the same time the presence of a help function is presented to the user via the display 24, step 64. The presence of the help function is presented by the information "Info" 60 related to the second selection key 30. The user can here mark the items by actuating the navigation key 32, which actuation is detected by the help function control unit 34. In case no item is marked, step, 66, the help function control unit 34 goes back and awaits a marking. If an item is marked, step 66, the help function control unit 34 monitors the selection keys 28, 30. If the first selection key 28 is pressed, i.e. if the marked item is selected, step 67, an action related to that item is performed, step 68. This action can be the starting of a function or application, but it can also be a presentation of a further menu or submenu. In case no selection is made, step 67, the help function control unit 34 checks if the help function is selected, step 70, by monitoring the second selection key 30. If the help function is not selected, step 70, the help function control unit 34 goes back and monitors if an item is marked, step 66. If however the help function is selected for the marked item, step 70, the help function control unit 34 orders the radio communication unit 40 to set up a voice connection with the help service device via the cellular network, step 72. The help function control unit 34 also fetches an item code for the marked item from the item code storage 36 and language setting information from the language setting storage 38, step 74. Thereafter the help function control unit 34 sends theses parameters to the help service device over the established voice connection using the radio communication unit 40, step 76. In this way the help service device can now present the user with oral information in relation to the marked item. Thereafter oral information related to the item is received in the phone, step 78. In this way the connection is being made automatically in dependence of if the user selects the help service. The display does furthermore not leave the menu shown, while the oral information is received. This makes it possible for the user to directly relate the oral information to the item he wants information about.

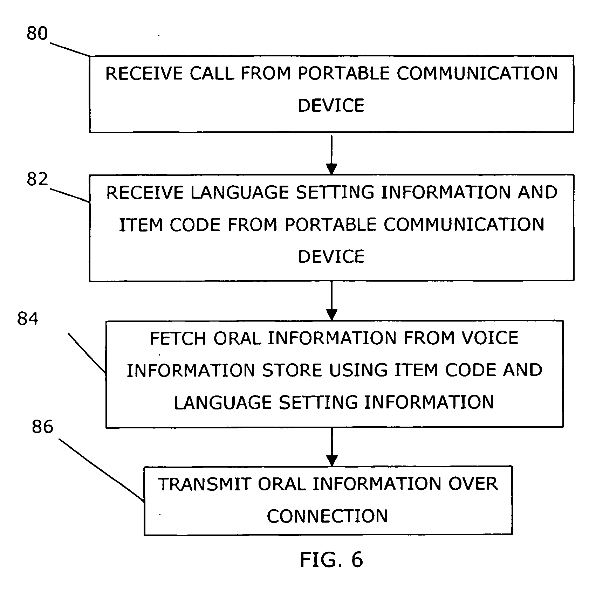

How the help service device provides oral information to the portable communication device will now be explained with reference being made to fig. 1 and 6, where the latter shows a flow chart of the method performed by the help service device. The communication unit 18 first receives a call from the phone 10, step 80. The voice message control unit 20 then receives the language setting information and item code from the phone 10 over this established connection via the communication unit 18, step 82. In dependence of this information the voice message control unit 20 fetches the information related to the item in the language of the phone from the voice message storage 22, step 84, and thereafter makes the communication unit 18 transfer the voice message over the connection, step 86. In this way the user gets to hear the information orally and essentially directly, without the information taking up any memory space in the phone. The information can be technical information or other types of information like help on how to use different features of the phone.

The voice message control unit and help function control unit are each normally provided in the form of one or more processors with corresponding program memories containing suitable software code. The different stores are normally provided by suitable memories. Since a menu navigating system is already provided in the portable communication device and the radio communication unit is also already provided in the portable communication device for normal speech connections, the part of the invention provided in the portable communication device is easily provided by just adding some extra software and memory capacity for the item codes, which occupies little space compared to if the additional information were to be included in the phone. Therefore considerable memory space is saved in portable communication device. Because of the speed with which speech connections are set up, the additional information is also obtained quickly and can be obtained virtually everywhere where the portable communication device is located. The information is furthermore easy to obtain, since the user just has to press one key. This solution furthermore enables providing the oral information and presenting the item simultaneously, such that the user can easily recognise for which item the additional information is related when he receives it.

There are a number of possible variations that can be made to the invention. Above was described that the additional information was provided in relation to an item in a list in the menu system. The different items do not have to be provided in a list, but can just as well be provided as a number of icons on the screen. The help function can furthermore be provided directly for an application, when it has been started and can generally be provided for any information that is provided on the display. The invention is furthermore not limited to the types of keys used. Any key can be used for selecting further information. It is furthermore possible that the help function can be provided as an item in a list, which is selected in normal fashion using for instance the first selection key.

The network is normally a GSM-type of network or a GPRS network. It is of course also possible that the network is WCDMA network. The help service device can be provided in the network, directly connected to the cellular network or be connected to it via some other network. The help service device can furthermore include tone signalling such that when a voice connection is set up, the user gets to choose from a number of different options on what oral information he wants.

The invention was described in relation to a cellular phone. A cellular phone is just one example of a device in which the invention can be implemented. The invention can for instance also be used in a PDA (personal digital assistant), a palm top computer or a lap top computer. Consequently the present invention is only to be limited by the following claims.

## Claims

1. Method of enabling provision of additional information in relation to items (46, 48, 50, 52, 54, 56) presented to a user of a portable communication device (10) comprising the steps of:
presenting a number of items to a user, (step 62), each being associated with a code,
providing a help function (30, 60) related to the items, (step 64), and
automatically establishing a voice connection to an external help service (16), (step 72),
**characterised by** the further steps of
transmitting the code to the external help service, (step 76), in dependence of a selection of the help function for a specific item, (steps 66, 70), such that a user can receive additional oral information regarding the item from the external help service based on the code.

2. Method according to claim 1, further comprising the step of receiving said oral information via the connection, (step 78).

3. Method according to claim 1 or 2, wherein the items are presented in the navigation system of and/or for at least one application provided in the portable communication device.

4. Method according to any previous claim, wherein the portable communication device has a language setting used when presenting items and the step of transmitting includes transmitting information concerning the language setting to the external help service, (step 76), in order to enable provision of oral information by the help service in the language of the device.

5. Portable communication device (10) for enabling provision of additional information in relation to items (46, 48, 50, 52, 54, 56) presented to a user of the portable communication device comprising:
an information presentation unit (24) for presenting items,
at least one user input unit (28, 30, 32),
**characterised by**
a radio communication unit (40) for establishing voice connections with an external help service (16),
an item code storage (36) comprising a code associated with each item for which help information is present, and
a help function control unit (34) arranged to:
provide a help function (30, 60) in relation to the items on the information presentation unit, and
control the radio communication unit, in dependence of the selection of the help function for a specific item, to automatically establish a voice connection to the external help service and transmit the code to the
external help service, such that a user can receive additional oral information regarding the item from the external help service based on the code.

6. Device according to claim 5, wherein the items are presented in the navigation system of and/or for an application provided by the portable communication device.

7. Device according to claim 6, wherein the portable communication device has a language setting storage (38) comprising a language setting used when presenting items and the help function control unit (34) is further arranged to make the radio communication unit automatically transmit information concerning the language setting used in the device to the external help service in order to enable provision of oral information by the help service in the language of the device.

8. Device according to any of claims 5 - 7, wherein the device is a cellular phone.

9. Method of providing, from a help service (16), additional Information in relation to items (46, 48, 50, 52, 54, 56) presented to a user of a portable communication device (10) **characterised by** the steps of:
receiving, via a voice connection set up from the portable communication device, a code from the portable communication device identifying an item, (step 82), which voice connection has been set up and which code has been sent automatically in dependence of a selection of a help function (30, 60) for a specific item in the portable communication device,
fetching oral information regarding the item based on said code, (step 84), and
providing said oral information regarding the item to the user of the portable communication device via the connection, (step 86).

10. Method according to claim 9, further comprising receiving language setting information from the portable communication device, (step 82), and the step of fetching oral information is also based on said language setting information, (step 84).

11. Method according to claim 9 or 10, further comprising the step of providing, from the help service, the user of the portable communication device to choose from at least two pieces of oral information in relation to the selected item and providing a piece of oral information in dependence of selection of that piece.

12. A help service device (16) for providing additional information in relation to items (46, 48, 50, 52, 54, 56) presented to a user of a portable communication device (10) **characterised by**:
a communication unit (18) arranged to receive a code identifying a specific item presented in a portable communication device via a voice connection set up from the portable communication device, where the voice connection has been set up and the code has been sent automatically in dependence of a selection of a help function (30, 60) for said specific item in the portable communication device,
a voice message store (22), and
a voice message control unit (20) arranged to retrieve oral information from the voice message store regarding the item based on said code and control the communication unit to provide said oral information to the user of the portable communication device via the connection.

13. Device according to claim 12, wherein the communication unit is arranged to receive and forward said code to the voice message control unit.

14. Device according to claim 12 or 13, wherein the communication unit is arranged to receive language setting information from the portable communication device and forward said language setting information to the voice message control unit and the voice message control unit is further arranged to retrieve oral information also based on said language setting information.

15. Device according to any of claims 12 - 14, wherein the voice message control unit is further arranged to allow the user of the portable communication device to choose from at least two pieces of oral information in relation to the selected item and to provide a piece of oral information in dependence of selection of that piece.

16. System for enabling provision of additional information in relation to items (46, 48, 50, 52, 54, 56) presented to users of portable communication devices comprising at least one portable communication device (10) according to claim 5 and a help service device (16) according to claim 12.

## Patentansprüche

1. Verfahren zur Aktivierung der Bereitstellung von Zusatzinformationen in Bezug auf Elemente (46, 48, 50, 52, 54, 56), die einem Benutzer eines tragbaren Kommunikationsgerätes dargestellt werden (10), folgende Schritte umfassend:
Darstellung mehrerer Elemente für einen Benutzer, (Schritt 62), wobei jedem Element ein Code zugeordnet ist,
Bereitstellung einer Hilfefunktion (30, 60) in Bezug auf die Elemente, (Schritt 64), und die automatische Herstellung einer Sprachverbindung zu einem externen Hilfsdienst (16), (Schritt72),
weiterhin durch folgende Schritte **gekennzeichnet**:
Senden des Codes an einen externen Hilfsdienst, (Schritt 76), in Abhängigkeit der Auswahl der Hilfefunktion für ein bestimmtes Element, (Schritte 66, 70), dergestalt, dass ein Benutzer mündliche Zusatzinformationen zu dem Element von dem externen Hilfsdienst auf der Basis des Codes erhalten kann.

2. Verfahren gemäß Anspruch 1, das außerdem einen Schritt zum Empfang der mündlichen Informationen über die Verbindung umfasst, (Schritt 78).

3. Verfahren gemäß Anspruch 1 oder 2, wobei die Elemente in dem Navigationssystem des tragbaren Kommunikationsgerätes und/oder für mindestens eine Anwendung des tragbaren Kommunikationsgerätes dargestellt werden.

4. Verfahren gemäß einem der obigen Ansprüche, wobei das tragbare Kommunikationsgerät eine Spracheinstellung aufweist, die bei der Darstellung der Elemente verwendet wird, wobei der Übertragungsschritt die Übertragung von Informationen enthält, die die Spracheinstellung für den externen Hilfsdienst betreffen, (Schritt 76), um die Bereitstellung von mündlichen Informationen durch den Hilfsdienst in der Sprache des Gerätes zu aktivieren.

5. Tragbares Kommunikationsgerät (10) zur Aktivierung der Bereitstellung von Zusatzinformationen in Bezug auf Elemente (46, 48, 50, 52, 54, 56), die einem Benutzer eines tragbaren Kommunikationsgerätes dargestellt werden (10), und umfassend:
eine Informationsdarstellungseinheit (24) zur Darstellung von Elementen,
mindestens eine Einheit für Benutzereingaben (28, 30, 32),
**gekennzeichnet durch**
eine Funkkommunikationseinheit (40) für die Errichtung von Sprachverbindungen mit einem externen Hilfsdienst (16),
einen Speicher für den Elementcode (36), der Folgendes umfasst: einen Code, der jedem Element zugeordnet ist, für das Hilfsinformationen vorhanden ist, und eine Steuereinheit für die Hilfefunktion (34), angeordnet zur
Bereitstellung einer Hilfefunktion (30, 60) in Bezug auf die Elemente in der Informationsdarstellungseinheit und
Steuerung der Funkkommunikationseinheit in Abhängigkeit von der Auswahl der Hilfefunktion für ein bestimmtes Element, um automatisch eine Sprachverbindung zu dem externen Hilfsdienst herzustellen und den Code an den externen Hilfsdienst dergestalt zu übertragen, dass der Benutzer von dem externen Hilfsdienst mündliche Zusatzinformationen in Bezug auf das Element auf der Basis des Codes erhalten kann.

6. Gerät gemäß Anspruch 5, wobei die Elemente in dem Navigationssystem des tragbaren Kommunikationsgerätes und/oder für eine Anwendung des tragbaren Kommunikationsgerätes dargestellt werden.

7. Gerät gemäß Anspruch 6, wobei das tragbare Kommunikationsgerät über einen Speicher für die Spracheinstellung (38) verfügt, der eine Spracheinstellung umfasst, die für die Darstellung der Elemente verwendet wird, und die Steuerungseinheit der Hilfefunktion (34) dergestalt angepasst ist, dass die Funkkommunikationseinheit automatisch die Informationen über die im Gerät verwendete Spracheinstellung an den externen Hilfsdienst überträgt, um die Bereitstellung mündlicher Informationen durch den Hilfsdienst in der Sprache des Gerätes zu aktivieren.

8. Gerät gemäß einem der Ansprüche 5 - 7 , wobei das Gerät ein Mobiltelefon ist.

9. Verfahren zur Bereitstellung von Zusatzinformationen in Bezug auf Elemente (46, 48, 50, 52, 54, 56), die einem Benutzer eines tragbaren Kommunikationsgerätes dargestellt werden (10), durch einen Hilfsdienst (16), folgende Schritte umfassend:
Empfang eines Codes von einem tragbaren Kommunikationsgerät über eine vom tragbaren Kommunikationsgerät errichtete Sprachverbindung, der ein Element angibt, (Schritt 82), für das die Verbindung errichtet wurde und dessen Code automatisch in Abhängigkeit der Auswahl einer Hilfefunktion (30, 60) für ein bestimmtes Element in dem tragbaren Kommunikationsgerät gesendet wurde;
Abruf mündlicher Informationen basierend auf diesem Code, (Schritt 84), und die Bereitstellung der mündlichen Informationen in Bezug auf das Element an den Benutzer des tragbaren Kommunikationsgerätes über die Verbindung, (Schritt 86).

10. Verfahren gemäß Anspruch 9, das weiterhin den Empfang der Spracheinstellungsinformationen von dem tragbaren Kommunikationsgerät, (Schritt 82), und den Schritt zum Abruf mündlicher Informationen auf der Basis der Spracheinstellungsinformationen, (Schritt 84) umfasst.

11. Verfahren gemäß Anspruch 9 oder 10, das weiterhin den Schritt umfasst, über den Hilfsdienst dem Benutzer des tragbaren Kommunikationsgerätes die Möglichkeit bereitzustellen, aus mindestens zwei Alternativen mündlicher Informationen für das ausgewählte Element auszuwählen, und die Bereitstellung dieser mündlichen Information in Abhängigkeit von der gewählten Alternative.

12. Gerät für den Hilfsdienst (16) zur Bereitstellung von Zusatzinformationen in Bezug auf Elemente (46, 48, 50, 52, 54, 56), die einem Benutzer eines tragbaren Kommunikationsgerätes dargestellt werden (10), **gekennzeichnet durch**:
eine Kommunikationseinheit (18), angepasst für den Empfang eines Codes über eine von einem tragbaren Kommunikationsgerät errichtete Sprachverbindung, der ein bestimmtes, im tragbaren Kommunikationsgerät dargestelltes Element angibt, wobei die Sprachverbindung errichtet ist und der Code automatisch in Abhängigkeit von der Auswahl einer Hilfefunktion (30, 60) für das bestimmte Element in dem tragbaren Kommunikationsgerät gesendet wurde,
einen Sprachnachrichtenspeicher (22) und
eine Steuereinheit für Sprachnachrichten (20), angepasst für den Abruf mündlicher Informationen aus dem Sprachnachrichtenspeicher in Bezug auf das Element auf der Basis des Codes, und zur Steuerung der Kommunikationseinheit, um die mündlichen Informationen dem Benutzer des tragbaren Kommunikationsgerätes über die Verbindung bereitzustellen.

13. Gerät gemäß Anspruch 12, wobei die Kommunikationseinheit angepasst ist, um den Code zu empfangen und an die Steuereinheit für die Sprachnachrichten weiterzuleiten.

14. Gerät gemäß Anspruch 12 oder 13, wobei die Kommunikationseinheit angepasst ist, um Spracheinstellungsinformationen von dem tragbaren Kommunikationsgerät zu empfangen und diese an die Steuereinheit für die Sprachnachrichten weiterzuleiten, wobei die Steuereinheit für die Sprachnachrichten weiterhin angepasst ist, um mündliche Informationen auch auf der Basis der Spracheinstellungsinformationen abzurufen.

15. Gerät gemäß einem der Ansprüche 12-14, wobei die Steuereinheit für die Sprachnachrichten weiterhin angepasst ist, um dem Benutzer des tragbaren Kommunikationsgerätes zu ermöglichen, aus mindestens zwei Alternativen von mündlichen Informationen für das ausgewählte Element auszuwählen, und eine mündliche Information in Abhängigkeit von der gewählten Alternative bereitzustellen.

16. System zur Aktivierung der Bereitstellung von Zusatzinformationen in Bezug auf Elemente (46, 48, 50, 52, 54, 56), die Benutzern eines tragbaren Kommunikationsgerätes angezeigt werden, das mindestens ein tragbares Kommunikationsgerät (10) nach Anspruch 5 und ein Gerät für einen Hilfsdienst (16) nach Anspruch 12 umfasst.

## Revendications

1. Procédé permettant de fournir des informations supplémentaires en relation avec des éléments (46, 48, 50, 52, 54, 56) présentés à un utilisateur d'un dispositif de communication portable (10), comprenant les étapes consistant à :
présenter à un utilisateur un certain nombre d'éléments (étape 62), chacun étant associé à un code,
fournir une fonction d'assistance (30, 60) liée aux éléments (étape 64) et établir automatiquement une connexion vocale avec un service extérieur d'assistance (16) (étape 72),
**caractérisé par** les étapes supplémentaires consistant à :
transmettre le code vers le service extérieur d'assistance (étape 76), en fonction de la sélection d'une fonction d'assistance pour un élément spécifique (étapes 66, 70), de manière à ce qu'un utilisateur puisse recevoir du service extérieur d'assistance, sur la base du code, des informations orales supplémentaires concernant l'élément.

2. Procédé selon la revendication 1, comprenant en outre l'étape consistant à recevoir lesdites informations orales via la connexion (étape 78).

3. Procédé selon la revendication 1 ou 2, dans lequel les éléments sont présentés dans le système de navigation appartenant et/ou destiné à au moins une application fournie dans le dispositif de communication portable.

4. Procédé selon l'une quelconque des revendications précédentes, dans lequel le dispositif de communication portable possède un paramètre de langue qui est utilisé pour la présentation des éléments, et dans lequel l'étape de transmission comprend la transmission au service extérieur d'assistance d'informations concernant le paramètre de langue (étape 76), afin de permettre au service d'assistance de fournir des informations orales dans la langue du dispositif.

5. Dispositif de communication portable (10) destiné à permettre de fournir des informations supplémentaires en relation avec des éléments (46, 48, 50, 52, 54, 56) présentés à un utilisateur du dispositif de communication portable, comprenant :
une unité de présentation d'informations (24), destinée à présenter des éléments,
au moins une unité de saisie utilisateur (28, 30, 32),
**caractérisé par** :
une unité de communication radio (40) destinée à établir des connexions vocales avec un service extérieur d'assistance (16),
un moyen de stockage de codes d'éléments (36) comprenant un code associé à chaque élément pour lequel il existe des informations d'assistance, et
une unité de commande de la fonction d'assistance (34), agencée afin de :
fournir une fonction d'assistance (30, 60) en relation avec les éléments sur l'unité de présentation d'informations, et
commander l'unité de communication radio, en fonction de la sélection de la fonction d'assistance pour un élément spécifique, de manière à établir automatiquement une connexion vocale avec le service extérieur d'assistance et à transmettre le code au service extérieur d'assistance, afin qu'un utilisateur puisse recevoir du service extérieur d'assistance, sur la base du code, des informations orales supplémentaires concernant l'élément.

6. Dispositif selon la revendication 5, dans lequel les éléments sont présentés dans le système de navigation appartenant et/ou destiné à une application fournie par le dispositif de communication portable.

7. Dispositif selon la revendication 6, dans lequel le dispositif de communication portable possède un moyen de stockage d'un paramètre de langue (38) comprenant un paramètre de langue utilisé dans la présentation des éléments, et dans lequel l'unité de commande de la fonction d'assistance (34) est en outre agencée pour commander à l'unité de communication radio de transmettre automatiquement au service extérieur d'assistance des informations concernant le paramètre de langue utilisé dans le dispositif, afin de permettre au service d'assistance de fournir des informations orales dans la langue du dispositif.

8. Dispositif selon l'une quelconque des revendications 5 à 7, dans lequel le dispositif est un téléphone cellulaire.

9. Procédé destiné à fournir, à partir d'un service d'assistance (16), des informations supplémentaires en relation avec des éléments (46, 48, 50, 52, 54, 56) présentés à un utilisateur d'un dispositif de communication portable (10), **caractérisé par** les étapes consistant à :
recevoir du dispositif de communication portable, sur une connexion vocale établie à partir du dispositif de communication portable, un code identifiant un élément (étape 82), laquelle connexion vocale ayant été établie et lequel code ayant été envoyé automatiquement en liaison avec la sélection d'une fonction d'assistance (30, 60) pour un élément spécifique dans le dispositif de communication portable,
obtenir des informations orales concernant l'élément sur la base dudit code (étape 84) et fournir à l'utilisateur du dispositif de communication portable lesdites informations orales concernant l'élément via la connexion (étape 86).

10. Procédé selon la revendication 9, comprenant en outre l'étape consistant à recevoir du dispositif de communication portable des informations de paramètre de langue (étape 82), l'étape d'obtention d'informations orales étant également fondée sur lesdites informations de paramètre de langue (étape 84).

11. Procédé selon la revendication 9 ou 10, comprenant en outre l'étape consistant à proposer à l'utilisateur du dispositif de communication portable, à partir du service d'assistance, de choisir entre au moins deux ensembles d'informations orales en relation avec l'élément sélectionné et à fournir un ensemble d'informations orales en fonction de la sélection de cet ensemble.

12. Dispositif de service d'assistance (16), destiné à fournir des informations supplémentaires en relation avec des éléments (46, 48, 50, 52, 54, 56) présentés à un utilisateur d'un dispositif de communication portable (10), **caractérisé par** :
une unité de communication (18) agencée pour recevoir un code qui identifie un élément spécifique présenté dans un dispositif de communication portable, via une connexion vocale établie à partir du dispositif de communication portable, la connexion vocale ayant été établie et le code ayant été envoyé automatiquement en fonction d'une sélection d'une fonction d'assistance (30, 60) pour ledit élément spécifique dans le dispositif de communication portable,
un moyen de stockage de messages vocaux (22), et
une unité de commande de messages vocaux (20), agencée pour obtenir des informations orales concernant l'élément, à partir du moyen de stockage de messages vocaux, sur la base dudit code, et pour commander l'unité de communication afin de fournir à l'utilisateur du dispositif de communication portable lesdites informations orales via la connexion.

13. Dispositif selon la revendication 12, dans lequel l'unité de communication est agencée pour recevoir et transférer ledit code à l'unité de commande de messages vocaux.

14. Dispositif selon la revendication 12 ou 13, dans lequel l'unité de communication est agencée pour recevoir du dispositif de communication portable des informations de paramètre de langue et pour transférer lesdites informations de paramètre de langue à ladite unité de commande de messages vocaux, et dans lequel l'unité de commande de messages vocaux est en outre agencée pour obtenir des informations orales également sur la base desdites informations de paramètre de langue.

15. Dispositif selon l'une quelconque des revendications 12 à 14, dans lequel l'unité de commande de messages vocaux est en outre agencée pour permettre à l'utilisateur du dispositif de communication portable de choisir entre au moins deux ensembles d'informations orales en relation avec l'élément sélectionné et à fournir un ensemble d'informations orales en fonction de la sélection de cet ensemble.

16. Système permettant de fournir des informations supplémentaires en relation avec des éléments (46, 48, 50, 52, 54, 56) présentés à des utilisateurs de dispositifs de communication portables, comprenant au moins un dispositif de communication portable (10) selon la revendication 5 et un dispositif de service d'assistance (16) selon la revendication 12.
